# EUROPEAN PATENT APPLICATION

(11) **EP 0 654 949 A1**
(43) Date of publication of application: **24.05.1995**
(21) Application number: 94118440.0
(22) Date of filing: 23.11.1994
(51) Int. Cl.: H04N 9/29

(54) **Demagnetization system for kinescope subjected to a variable magnetic field**

(30) Priority: 23.11.1993 IT TO930876
(71) Applicant: Società Italiana per lo Sviluppo dell'Elettronica S.I.SV.EL. S.p.A., I-10060 None (TO) (IT)
(72) Inventor: Magris, Renzo, I-33170 Pordenone (IT)

(57) **Abstract**

A degaussing system for kinescopes is described, particularly apt for use in situations wherein kinescopes are subjected to variable magnetic fields, utilising a damped oscillating circuit; the main characteristic of the described system consists in that it provides means for periodically inverting the polarity of the initial degaussing current.

## Description

The present invention refers to a degaussing system for kinescopes, particularly apt for use in situations wherein kinescopes are subjected to variable magnetic fields, utilising a damped oscillating circuit.

It is known that in degaussing systems for kinescopes a current passes through the degaussing coils taken from the electric mains supply, the amplitude of which is annulled over a certain time, thus subjecting the holed mask with hysteresis cycles being increasingly weaker until they are annulled.

This process must take place in a gradual manner and cover a certain period of time because, if the current were to be suddenly reduced to zero, a residual magnetism would remain and the purpose would not be reached.

The system mostly used for obtaining a current whose amplitude is progressively reduced consists in the use, in series to the degaussing coils, of a positive resistor coefficient (PTC), which, being heated increases its resistance, gradually decreasing the value of the current, to negligible values, over a period of 20-30 seconds.

For its cooling, and thus returning to its initial conditions, the PTC requires however approximately 10-15 minutes; this does not represent a problem for kinescopes used in fixed positions, for example in normal domestic televisions, for which a single daily degaussing is sufficient, upon turning the apparatus on for the first time. This is not so for televisions arranged on movable supports (for example rotary video walls), or casually located in the vicinity of variable magnetic fields. In such cases the degaussing must be more frequent, in certain cases even once a minute.

It is clear that in such conditions a PTC system cannot be used, as it would not have sufficient time for cooling down from one degaussing operation to the next.

Oscillating circuits L-C can be used in such cases i.e. made up of an inductance L (in practice that of the degaussing bobbins) and a capacitor C, which is periodically charged with a continuous voltage V, and that discharges on the inductance L, producing a damped oscillation; the higher the coil resistance the faster the dampening.

The usual resistance value of degaussing coils is 20-30 ohm; using a capacity capacitor not being too large, the oscillation dampens much too quickly, after a couple of cycles; bringing about a residual magnetisation as a consequence, and, after several degaussing operations, the kinescope becomes spotted.

For over coming this drawback a high capacity capacitor and low resistance coils could be used; this solution is however cumbersome and expensive.

The aim of the present invention is that of illustrating how it is possible to easily eliminate the mentioned drawback.

For reaching such aim the subject of the present invention is a degaussing system for kinescopes, particularly apt for use in situations wherein kinescopes are subjected to variable magnetic fields, utilising a damped oscillating circuit, characterised in that it provides means for periodically reversing the polarity of the initial degaussing current. Further characteristics and advantages of the present invention will result in being clear from the following description and annexed drawings, supplied purely as an explanatory and non-limiting example, wherein:
- figure 1 represents the electric diagram of the relevant circuitry part of a degaussing system according to the invention;
- figure 2 represents the path of the degaussing current produced by the circuit of figure 1 during two successive degaussings;
- figure 3 represents the piloting wave forms of the two relays of figure 1;
- figure 4 represents a circuit for generating the wave forms of figure 3.

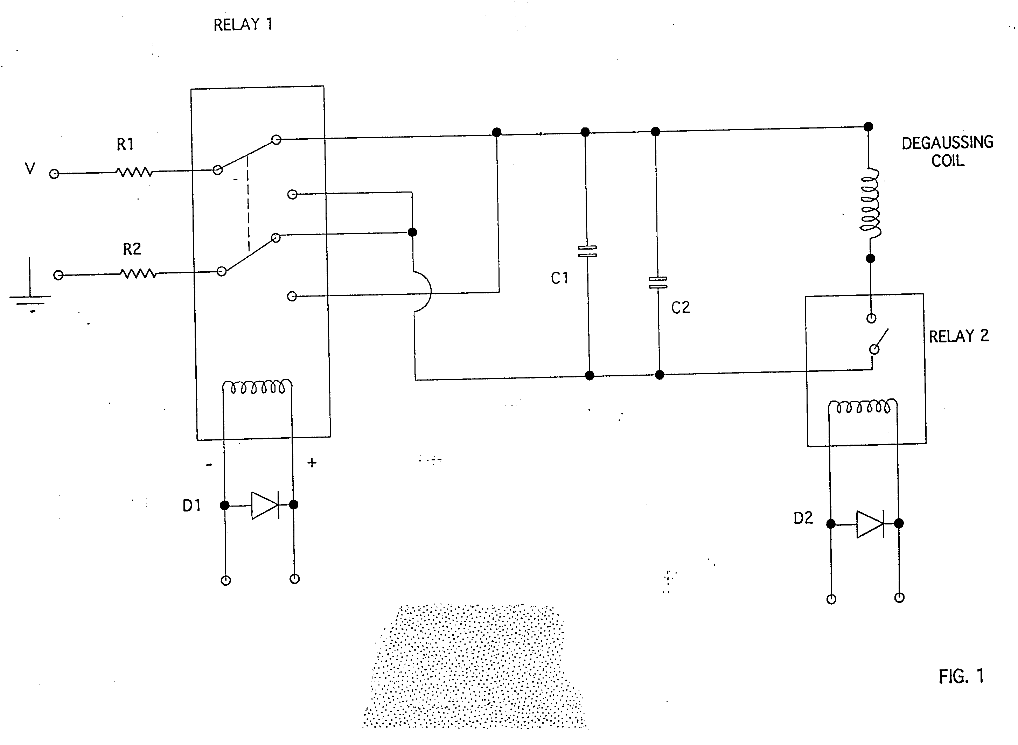

Figure 1 schematically represents a degaussing system according to the invention.

The system according to the invention is based on the principle of inverting, with each successive degaussing operation, the sense of the current in the coils; in this way the residual magnetisation of the first is cancelled from the residual magnetisation of the second operation; in other words the residual magnetisations rather than adding are subtracted, thus being removed.

The invention may be carried out by means of a change-over switch that inverts the polarity of the capacitor charge; or by reversing the connections to the bobbins.

The circuit of Figure 1 represents a system according to the invention, applied for example to all the 64 monitors of a rotary video display (videowall), having 4 walls, each of which made up of 4x4 monitors.

In figure 1 the d.c. supply voltage V of 144 volts is taken from the normal supply circuit of the monitor; the resistors R1 and R2 are two resistances of 47 Kohm, 2 watts.

The first double-throw relay (relay 1, type RA 12 WK by the company Takamisawa) is used for reversing every time the voltage charge to the capacity, that it is represented by two capacitors C1 and C2, of 4.7 microfarad each, connected in parallel.

The second relay (relay 2, type VSB 12 MB-NR by the company Takamisawa) serves to connect the degaussing coil to the capacitor with each degaussing operation; in the example a degaussing operation is provided once a minute, for a duration of one second each.

Diodes D1 and D2 serve for the usual protection against overvoltage generated at the ends of the coils upon the opening of the circuits.

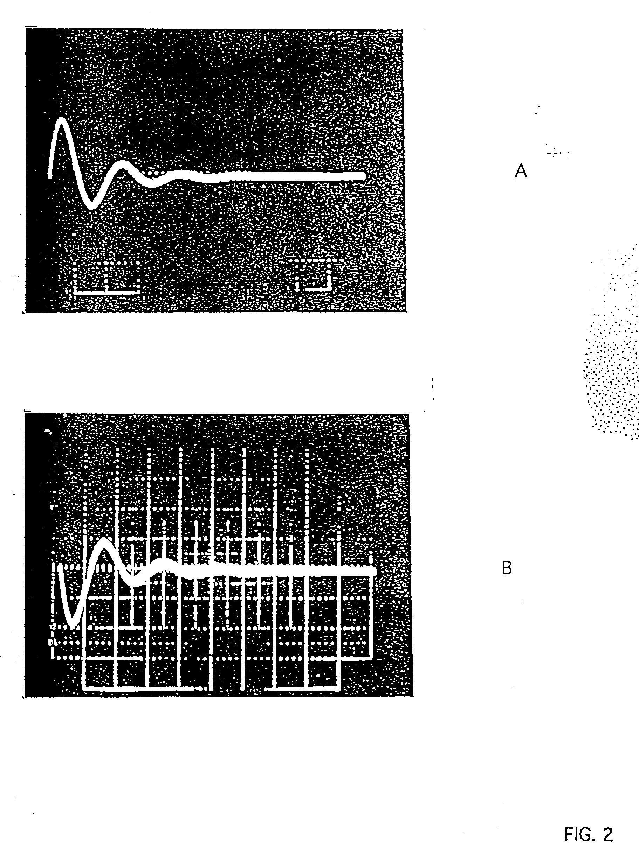

Figure 2 represents the path of the degaussing current during two successive degaussing operations.

As can be seen the current, after having reached a peak of about 8 A, is rapidly damped, in approximately two complete cycles; in A the path is seen during the first operation; in B the path during the successive operation; and so on.

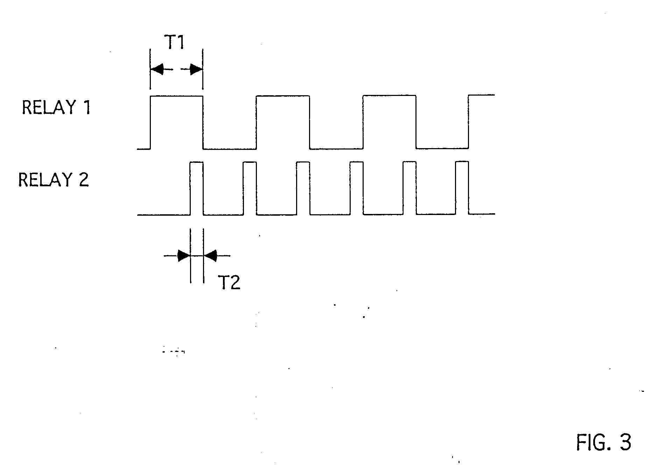

Figure 3 represents the piloting of the two relays of figure 1; the first relay is piloted for 60 seconds (time T1), while it is not piloted for the 60 successive seconds; in such a way the desired voltage inversion is obtained for alternate periods of 60 seconds.

The second relay is piloted for 1 second every minute; in such a way the oscillating circuit is closed and the discharge of the capacitor is produced, according to the curves represented figure 2.

Generally the time T1 must be sufficient so as to allow the charging of the capacity C1 + C2 to the voltage V, while T2 must allow for the complete damping of the current in the degaussing coil.

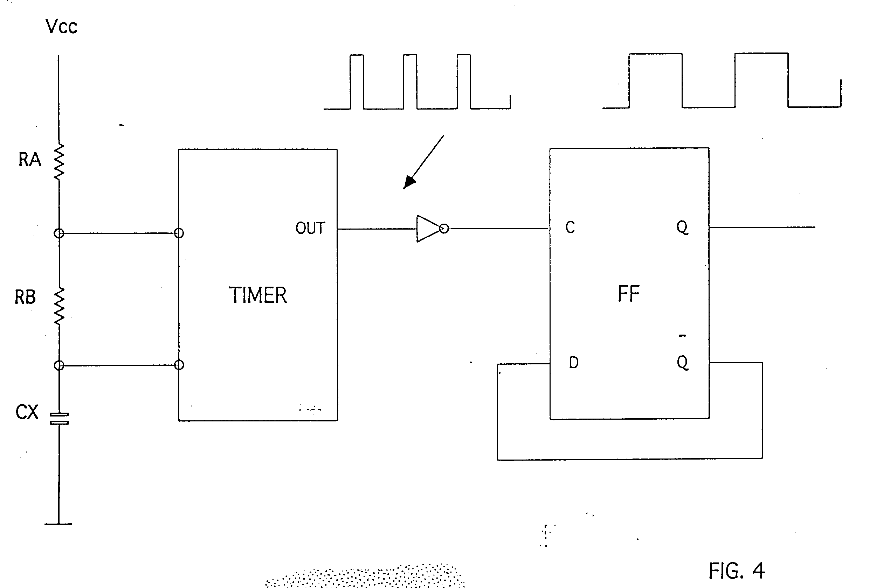

A possible realisation of the control circuit of the relay is represented in figure 4.

The symbol Vcc indicates the voltage supply of the circuit; symbols Ra, Rb and Cx show respectively two resistances and a capacity that determine times and the duty cycle of the piloting wave form of the second relay (RELAY 2), that is taken at the output of the astable multivibrator indicated with the symbol TIMER.

By way of an inverter (symbol I) the flip-flop (FF) that follows is triggered by the descending front of the signal and pilots the first relay (RELAY 1).

A double degaussing system is possible, i.e. a conventional PTC degaussing system may be coupled to the fast degaussing system described, coming into act only upon the turning on of the apparatus. From the present description the characteristics of the degaussing system subject of the present invention are clear, as are its advantages.

In particular the degaussing system according to the invention allows with simple means an effective and frequent degaussing of kinescopes, in particular those subjected to variable magnetic fields.

It is clear that numerous variations can be introduced to the degaussing system subject of the present invention, without departing from the novelty principles inherent in the innovative idea, as is clear that in the practical realisation of the invention the materials and the forms of the illustrated details may be different, and they can be replaced with technically equivalent elements.

For example the first relay (rely 1) may be replaced with 4 transistors or bridge connected SCR; furthermore, if available also a negative voltage -V, the first relay may be simple rather than double exchange. The second relay (relay 2) can in turn be replaced with a triac.

## Claims

1. Degaussing system for picture-tubes, particularly apt for use in situations wherein picture-tubes are subjected to variable magnetic fields, utilising a damped oscillating circuit (Degaussing coil, C1, C2), characterised in that it provides first means (Relay 1) for periodically inverting the polarity of the initial degaussing current.

2. Degaussing system, according to claim 1, characterised in that said first means (relay 1) for periodically inverting the polarity of the initial degaussing current provide for periodically inverting the voltage charge of the capacitor (C1, C2) of said damped oscillating circuit.

3. Degaussing system, according to claim 1, characterised in that said first means (relay 1) for periodically inverting the polarity of the initial degaussing current provide for periodically inverting connections of the degaussing bobbin (Degaussing coil) that represents the inductance of said damped oscillating circuit.

4. Degaussing system, according to claim 1, characterised in that said first means for periodically inverting the polarity of the initial degaussing current include a relay (relay 1).

5. Degaussing system, according to claim 1, characterised in that it comprises second means (relay 2) for periodically connecting the inductance of said oscillating circuit to the capacity of the same circuit.

6. Degaussing system, according to claim 1, characterised in that the activation and deactivation period of said first means (relay 1) are such to allow the charging of said capacitor (C1, C2).

7. Degaussing system, according to claim 1, characterised in that the activation period of said first means (relay 1) is of about 60 seconds.

8. Degaussing system, according to claim 5, characterised in that the activation period of said first means (relay 2) is such to allow for the complete damping of the oscillating current in the degaussing bobbin.

9. Degaussing system, according to claim 5, characterised in that the activation period of said first means (relay 2) is of about 1 second.

10. Degaussing system, according to claim 5, characterised in that the activation period of said second means (relay 2) is at least 50 times less than the activation period of said first means (relay 1).

11. Degaussing system for kinescopes, particularly apt for use in situations wherein kinescopes are subjected to variable magnetic fields, characterised in that a double degaussing system is provided, i.e. to the periodic degaussing system according to one or more of the previous claims a conventional PTC degaussing system is coupled, coming into act only upon the ignition of the apparatus.

12. Degaussing system, according to claim 1, characterised in that said first means for periodically inverting the polarity of the initial degaussing current include 4 bridge connected controllable semiconductors.

13. Degaussing system, according to claim 5, characterised in that said second means for periodically connecting the inductance of said oscillating circuit to the capacity of said circuit include a relay (relay 2).

14. Degaussing system, according to claim 5, characterised in that said second means for connecting periodically the inductance of said oscillating circuit to the capacity of said circuit include a triac.
